# EUROPÄISCHE PATENTSCHRIFT

(11) **EP 1 899 901 B1**
(45) Veröffentlichungstag und Bekanntmachung des Hinweises auf die Patenterteilung: **28.10.2015**
(21) Anmeldenummer: 06762366.0
(22) Anmeldetag: 04.07.2006
(51) Int. Cl.: G03H 1/02, B42D 25/29, G03H 1/00

(54) **MEHRSCHICHTKÖRPER MIT ELEKTRISCH STEUERBAREN, OPTISCH WIRKSAMEN SCHICHTSYSTEMEN**
MULTILAYER BODY WITH ELECTRICALLY CONTROLLABLE OPTICALLY ACTIVE SYSTEMS OF LAYERS
CORPS MULTICOUCHE PRESENTANT DES SYSTEMES DE COUCHES A EFFET OPTIQUE ET A COMMANDE ELECTRIQUE

(30) Priorität: 04.07.2005 DE 102005031448
(43) Veröffentlichungstag der Anmeldung: 19.03.2008
(73) Patentinhaber: PolyIC GmbH & Co. KG, 90763 Fürth (DE)
(72) Erfinder: LUDWIG, Klaus, 91058 Erlangen (DE); CLEMENS, Wolfgang, 90617 Puschendorf (DE)
(74) Vertreter: Louis Pöhlau Lohrentz
(86) Internationale Anmeldenummer: PCT/EP2006/006472
(87) Internationale Veröffentlichungsnummer: WO 2007/003405

(56) Entgegenhaltungen:
- EP-A- 0 435 029
- WO-A-00/76778
- WO-A-99/10769
- AU-B2- 488 652
- US-A- 4 472 627
- US-A- 5 202 677
- US-A- 5 625 474
- US-A1- 2003 227 664
- US-A1- 2004 092 196
- US-A1- 2004 160 389
- US-B1- 6 259 506
- US-B1- 6 369 793
- US-B1- 6 414 728

## Beschreibung

Die Erfindung betrifft einen Mehrschichtkörper mit einem optisch wirksamen Schichtsystem.

Optisch wirksame Schichtsysteme werden beispielsweise für dekorative oder informative Zwecke eingesetzt, oder um Sicherheitsdokumente mit optischen Sicherheitsmerkmalen auszustatten, die einerseits eine Fälschung unter Verwendung moderner Farbkopierer und anderer Reproduktionssysteme erschweren und andererseits für den Laien leicht und eindeutig erkennbar sind.

Zu diesem Zweck ist es bekannt, in Wertdokumente Sicherheitsfäden als Sicherheitselemente einzubringen, wobei die Anordnung so ist, daß der Faden bereichsweise oberflächlich freigelegt ist und so die in den Faden eingearbeiteten optischen Sicherheitsmerkmale, beispielsweise Hologramme oder partielle Demetallisierungen, für den Betrachter überprüfbar sind.

Weiter ist es aus EP 1 134 694 A1 bekannt, auf einem Blatt oder einem Streifen aus Papier eine elektronische Schaltung aus organischem Halbleitermaterial aufzudrucken, die über eine Leiterbahn mit einem Metallstreifen eines Geldscheins verbunden ist. Die elektronische Schaltung basiert hierbei nicht auf aus üblichen Halbleitermaterialien aufgebauten elektronischen Komponenten, sondern auf organischen Feldeffekttransistoren in Polymer-Halbleitertechnologie. Der Metallstreifen dient hierbei als Antenne, über die eine Kommunikation zwischen der Halbleiterschaltung mit einer entsprechenden Auswerteschaltung möglich ist. Damit kann die elektronische Schaltung zur Erkennung von Fälschungen dienen, weiter wird eine Ortung des Dokuments ermöglicht.

Der Erfindung liegt nun die Aufgabe zugrunde, einen Mehrschichtkörper mit einer verbesserten optischen Erscheinung anzugeben.

Die Aufgabe der Erfindung wird mit einem Mehrschichtkörper nach Anspruch 1, mit einem optisch wirksamen ersten Schichtsystem, gelöst, wobei es sich bei dem ersten Schichtsystem um ein optisch variables Element (OVD) handelt, und die optische Wirkung des ersten Schichtsystems durch ein elektrisch steuerbares zweites Schichtsystem beeinflußbar ist.

Ein solcher Mehrschichtkörper kann mit geringer Dicke und flexibel ausgebildet werden, woraus sich bezüglich seiner Anwendung und seiner Herstellung besondere Vorteile ergeben. Der Mehrschichtkörper kann beispielsweise als Folienkörper in einem Rolle-zu-Rolle-Prozeß kostengünstig hergestellt werden und eignet sich deshalb für Massenprodukte.

Der erfindungsgemäße Mehrschichtkörper ist sowohl als neuartiges Sicherheitselement für Wertdokumente, Sicherheitsdokumente und zur Warensicherung einsetzbar, als auch für dekorative Zwecke oder für Produktwerbung. Weiter ist der Mehrschichtkörper in Displays, in RFID-Tags und als Statusanzeige in elektrischen Geräten einsetzbar.

Trotz der möglichen geringen Dicke des Mehrschichtkörpers kann er als großflächiger Folienkörper ausgebildet sein, beispielsweise auf Verpackungen, Fenstern oder Gebäudeflächen aufgebracht sein.

Weitere vorteilhafte Ausgestaltungen sind in den Unteransprüchen bezeichnet.

Es ist vorgesehen, daß das zweite Schichtsystem über dem ersten Schichtsystem angeordnet ist.

Weiter kann vorgesehen sein, daß das zweite Schichtsystem in seinen optischen Eigenschaften, insbesondere in seiner optischen Dichte und/oder in seiner Lichtstreuung und/oder in seiner Farbe steuerbar ist.

Weiters ist vorgesehen, daß das zweite Schichtsystem eine obere und eine untere Elektrodenschicht aufweist, zwischen denen eine oder mehrere Schichten angeordnet sind. Bei den Schichten handelt es sich vorzugsweise um Schichten, deren optische Eigenschaften durch die Anlegung einer Spannung zwischen den Elektrodenschichten verändert werden können.

Die obere Elektrodenschicht kann aus Polyethylendioxythiopen (PEDOT)/PSS oder PANI sein.

Es kann weiter vorgesehen sein, daß die obere Elektrodenschicht eine ITO (Indium-Zinnoxid)-Schicht ist. Bei solchen Schichten handelt es sich um transparente leitfähige Schichten.

Die obere Elektrode kann auch aus einer sehr dünnen durchscheinenden Metallschicht bestehen. Die Metallschicht kann eine Dicke von 0,5 nm bis 30 nm aufweisen, typischerweise eine Dicke von 5 nm aufweisen und aus Gold, Silber, Chrom, Kupfer oder Aluminium sein.

In einer weiteren Ausgestaltung ist vorgesehen, daß das zweite Schichtsystem eine Schicht aufweist, die zwischen der oberen und der unteren Elektrodenschicht angeordnet ist und die eine Vielzahl Flüssigkristall-Bläschen mit einem Durchmesser von 0,1 µm bis 40 µm aufweist, die in einer Polymermatrix gebunden sind. Die Polymermatrix kann beispielsweise aus Monomeren in einer Schichtdicke von 5 µm bis 40 µm bestehen, die z.B. durch UV-Bestrahlung polymerisiert werden. Es kann sich dabei beispielsweise um das Produkt PN 393 der Fa. Nematel handeln. Die Flüssigkristall-Bläschen weisen Flüssigkristalle in ungeordneter, zufälliger Ausrichtung auf. Sie zerstreuen deshalb einfallendes Licht, so daß unter der Schicht angeordnete Schichten nicht wahrnehmbar sind bzw. nicht scharf abgebildet werden können. Die Flüssigkristalle werden in einem elektrischen Feld ausgerichtet, das zwischen der oberen und der unteren Elektrodenschicht ausgebildet wird, wenn die Elektrodenschichten mit den Polen einer elektrischen Spannungsquelle verbunden sind.

Bei der Spannungsquelle kann es sich sowohl um eine Gleichspannungsquelle als auch um eine Wechselspannungsquelle handeln. Es kann also vorgesehen sein, elektrochemische Spannungsquellen, elektrische Schwingkreise, die sich in einem elektromagnetischen Feld befinden und deren Signal mit einer elektronischen Schaltung auf eine passende Signalfrequenz, z.B. 100Hz aufbereitet wird oder Solarzellen als Spannungsquelle für den erfindungsgemäßen Mehrschichtkörper zu verwenden.

In einer weiteren vorteilhaften Ausgestaltung ist vorgesehen, daß das zweite Schichtsystem eine zwischen der oberen und der unteren Elektrodenschicht angeordnete Flüssigkristallschicht und mindestens eine Polarisatorschicht aufweist. Es können beispielsweise zwei Polarisatorschichten vorgesehen sein, deren Polarisationsebenen um 90° gekreuzt sind. Weiter kann vorgesehen sein, daß die Flüssigkristallschicht cholesterische Flüssigkristalle aufweist. Durch die Flüssigkristalle wird die Polarisationsrichtung des Lichtes um 90° gedreht. Das hat zur Folge, daß das polarisierte Licht durch die untere Polarisationsschicht hindurchtreten kann. Das zweite Schichtsystem erscheint deshalb durchsichtig und gibt den Blick frei auf das erste Schichtsystem. Wenn zwischen den beiden Elektrodenschichten ein elektrisches Feld ausgebildet ist, erscheint das zweite Schichtsystem dunkel und versperrt den Blick auf das darunter angeordnete erste Schichtsystem.

Weiter kann vorgesehen sein, daß das zweite Schichtsystem eine zwischen der oberen und der unteren Elektrodenschicht angeordnete Elektrolytschicht aufweist, und daß die obere Elektrodenschicht eine elektrochrome Schicht ist, beispielsweise aus einem elektrisch leitfähigen organischen Material, wie PEDOT/PSS oder Polyanilin (PANI). Eine durch die Stromrichtung in der Elektrolytschicht steuerbare Redoxreaktion kann die Farbe einer elektrochromen Schicht aus PEDOT/PSS von Blaßblau zu Dunkelblau ändern. Wenn die elektrochrome Schicht aus PANI besteht, kann die Farbe von Grünblau zu Bläulich geändert werden. Die Elektrolytschicht kann auch Metallionen enthalten, wobei die Stromrichtung in der Elektrolytschicht darüber bestimmt, ob Metallionen von der Elektrolytschicht in die elektrochrome Elektrodenschicht transportiert oder aus dieser entfernt werden. Wenn es sich beispielsweise bei den Metallionen um Wolframionen handelt, kann die elektrochrome Elektrodenschicht von dunkelblau zu farblos gesteuert werden.

Es gibt weitere elektrochrome Systeme, z.B. solche, die auf eine Änderung des pH-Wertes reagieren. Diese können ebenfalls verwendet werden.

Da das erste Schichtsystem eine metallische Reflexionsschicht aufweist, ist vorgesehen, daß die elektrisch leitfähige Schicht die untere Elektrodenschicht des zweiten Schichtsystem bildet.

In einer weiteren vorteilhaften Ausgestaltung ist vorgesehen, daß das zweite Schichtsystem eine thermochrome Schicht und eine elektrische Widerstandsschicht aufweist.

Es kann weiter vorgesehen sein, daß mindestens eine Schicht des ersten Schichtsystems die elektrische Widerstandsschicht des zweiten Schichtsystems bildet. Das zweite Schichtsystem kann so ausgebildet sein, daß es Bereiche aufweist, die eine bildliche und/oder alphanumerische Information wiedergeben. Die Bereiche können beispielsweise die Form von Buchstaben haben, die einen Schriftzug bilden, der durch die elektrische Ansteuerung des zweiten Schichtsystems hervortreten kann. Es kann sich auch um einen Barcode handeln, der nur dann hervortritt, wenn der Mehrschichtkörper in einem Lesegerät einem elektrischen Feld ausgesetzt ist. Ein solches Merkmal ist mit herkömmlichen Reproduktionsverfahren nicht fälschbar. Beispielsweise kann in einem solchen Anwendungsfall vorgesehen sein, daß das zweite Schichtsystem ohne Elektrodenschichten ausgebildet ist. Vorteilhafterweise ist dadurch bei normalem Gebrauch des Objektes, auf das der erfindungsgemäße Mehrschichtkörper aufgebracht ist, das zweite Schichtsystem nicht wahrnehmbar. Weiter kann vorgesehen sein, daß die optische Wirkung des zweiten Schichtsystems reversibel steuerbar ist.

In einer weiteren vorteilhaften Ausgestaltung ist vorgesehen, daß die durch eine elektrische Spannung hervorgerufene optische Veränderung des zweiten Schichtsystems nach Abschaltung der elektrischen Spannung erhalten ist. Dazu können die Flüssigkristalle als ferroelektrische Flüssigkristalle ausgebildet sein. Ferroelektrische Flüssigkristalle vermögen die Wirkung des elektrischen Feldes für längere Zeit, beispielsweise über Wochen zu speichern und können durch einen elektrischen Impuls zurückgesetzt werden. Es kann also beispielsweise vorgesehen sein, einen Mehrschichtkörper mit ferroelektrischen Flüssigkristallen als Datenspeicher für ein Verfallsdatum einzusetzen. Das Verfallsdatum kann nach Ablauf einer Verfallsfrist sichtbar werden, weil die ferroelektrischen Flüssigkristalle in ihre Ausgangslage zurückkehren und die zweite Strukturschicht wieder durchsichtig wird.

Unter einem elektrisch steuerbaren Schichtsystem wird hier jedes Schichtsystem verstanden, dessen optische Wirkung durch Anlegen einer elektrischen Spannung in mindestens einem Parameter verändert wird. Es handelt sich hierbei um die Änderung einer Materialeigenschaft, die durch eine elektrische Größe bestimmt wird.

Es ist vorgesehen, daß das erste Schichtsystem eine Replizierschicht und eine metallische Reflexionsschicht aufweist und in die Replizierschicht eine diffraktive Reliefstruktur abgeformt ist, die insbesondere ein Beugungsgitter und/oder ein Hologramm oder Kinegram^{®} oder Trustseal^{®} oder vergleichbares System bildet.

Weiter kann das erste Schichtsystem ein Dünnfilmschichtsystem sein zur Erzeugung von blickwinkelabhängigen Farbverschiebungseffekten mittels Interferenz. Farbwechselerzeugende Schichten sind mit einer Dicke d = λ/4 oder d = λ/2 ausgebildet, wobei λ die Wellenlänge des auftreffenden Lichtes bezeichnet.

Weiter ist es auch möglich, das Dünnfilmschichtsystem aus einer Abfolge von hoch- und niedrigbrechenden Schichten aufzubauen. Solche Schichten werden auch als HRI-Schichten (HRI = High Refraction Index) bzw. als LRI-Schichten (LRI = Low Refraction Index) bezeichnet. Je höher die Anzahl der Schichten gewählt wird, um so schärfer läßt sich die Wellenlänge des Farbwechseleffekts einstellen. Besonders vorteilhaft ist es hierbei, eine derartiges Dünnfilmschichtsystem aus zwei bis zehn Schichten (geradzahlige Variante) oder drei bis neun Schichten (ungeradzahlige Variante) aufzubauen.

Es kann sich bei dem ersten Schichtsystem auch um ein Schichtsystem handeln, das eine cholesterische Flüssigkristallschicht und eine Absorptionsschicht aufweist. Ein solches Schichtsystem zeigt einen blickwinkelabhängigen Farbverschiebungseffekt ähnlich dem eines Dünnfilmschichtsystems.

Es sind auch Systeme denkbar, die nur eine Elektrodenebene benötigen. Es kann sich dabei beispielsweise um ein Heizelement für eine thermochrome Schicht handeln oder um ein vorbeschriebenes Schichtsystem mit cholesterischen Flüssigkristallen, die in der Ebene ansteuerbar ist. Die unter den Flüssigkristallen angeordnete Schicht kann voneinander beabstandete Erhebungen aufweisen mit einer Breite von ca. 20 µm und einer Höhe von 20 µm bis 100 µm, die in einem Anstand < 100 µm angeordnet sind. Zwischen den Erhebungen kann ein oben beschriebenes OVD ausgebildet sein, das wegen der geringen Abmessungen der Erhebungen optisch als Ganzes erscheint. Die auf den Erhebungen ausgebildeten Elektroden bilden streifenförmige Bereiche, die abwechselnd mit den Polen einer Spannungsquelle schaltbar verbunden sind. Das zwischen den Bereichen ausgebildete elektrische Feld verläuft also innerhalb der Flüssigkristallschicht und nicht senkrecht zur Flüssigkristallschicht.

Es kann auch vorgesehen sein, die Erhebungen schachbrettartig anzuordnen bzw. das erste und / oder zweite Schichtsystem entsprechend zu strukturieren und die Verbindungsleitungen als Matrix auszubilden, so daß jeder Elektrodenbereich zeilen- und spaltenweise ansteuerbar ist.

Es ist auch möglich, die zwischen einer oberen Elektrodenschicht und einer schachbrettartig strukturierten unteren Elektrodenschicht befindlichen Flüssigkristalle punktweise anzusteuern. Es kann also vorgesehen sein, daß über angesteuerten Bereichen der unteren Elektrodenschicht angeordnete Flüssigkristalle im elektrischen Feld ausgerichtet sind und über nicht angesteuerten Bereichen der unteren Elektrodenschicht angeordnete Flüssigkristalle die ungeordnete Ausrichtung beibehalten. Die angesteuerten oder die nicht angesteuerten Bereiche können auf diese Weise ein Muster bilden, beispielsweise ein Bild, ein Logo oder eines oder mehrere alphanumerische Zeichen darstellen. Die voneinander elektrisch isolierten Bereiche können abwechselnd angesteuert werden, so daß die Teilbereiche nacheinander ihre optische Erscheinung wechseln.

In einer weiteren Ausgestaltung ist vorgesehen, daß der Mehrschichtkörper eine Ansteuerelektronik aufweist, die vorzugsweise eine organische Ansteuerelektronik ist.

Es kann auch vorgesehen sein, daß der Mehrschichtkörper einen oder mehrere Sensoren und/oder RFID-Schaltungen und/oder Displays und/oder Schalter und/oder Spannungsquellen aufweist.

Mit den beiden vorgenannten Ausbildungen wird das Anwendungsfeld des erfindungsgemäßen Mehrschichtkörpers grob umrissen, wobei weitere Anwendungen dadurch nicht eingeschränkt sind.

Es kann weiter vorgesehen sein, daß der Mehrschichtkörper flexibel ausgebildet ist und/oder eine flexible, transparente Trägerfolie aufweist. Ein flexibler Mehrschichtkörper kann vorteilhafterweise auch auf gekrümmte Flächen aufgebracht werden. Er widersteht besonders gut Knickbeanspruchungen, wie sie auf dünnen Trägersubstraten, wie beispielsweise Verpackungen, Banknoten oder Dokumenten, auftreten können.

Insbesondere flexible Mehrschichtkörper lassen sich kostengünstig als Massenprodukt auf Anlagen herstellen, die für einen Rolle-zu-Rolle-Prozeß vorgesehen sind. Dabei können ohne weiteres zusätzliche Baugruppen, wie RFID-Tag's, Solarzellen, Batterien, Speicher, integrierte Schaltungen, Folienschalter und Sensoren, in den Mehrschichtkörper integriert werden.

Im folgenden wird die Erfindung anhand von mehreren Ausführungsbeispielen unter Zuhilfenahme der beiliegenden Zeichnungen beispielhaft verdeutlicht.

Es zeigen
Fig. 1a und 1b ein erstes Ausführungsbeispiel eines erfindungsgemäßen Mehrschichtkörpers in schematischer Schnittdarstellung;
Fig. 2a und 2b ein zweites Ausführungsbeispiel eines erfindungsgemäßen Mehrschichtkörpers in schematischer Schnittdarstellung;
Fig. 3a und 3b ein drittes Ausführungsbeispiel eines erfindungsgemäßen Mehrschichtkörpers in schematischer Schnittdarstellung;
Fig. 4a und 4b ein viertes Ausführungsbeispiel eines erfindungsgemäßen Mehrschichtkörpers in schematischer Schnittdarstellung;
Fig. 5a und 5b ein fünftes Beispiel eines Mehrschichtkörpers in schematischer Schnittdarstellung;
Fig. 6a ein Applikationsbeispiel eines erfindungsgemäßen bis 7b Mehrschichtkörpers.

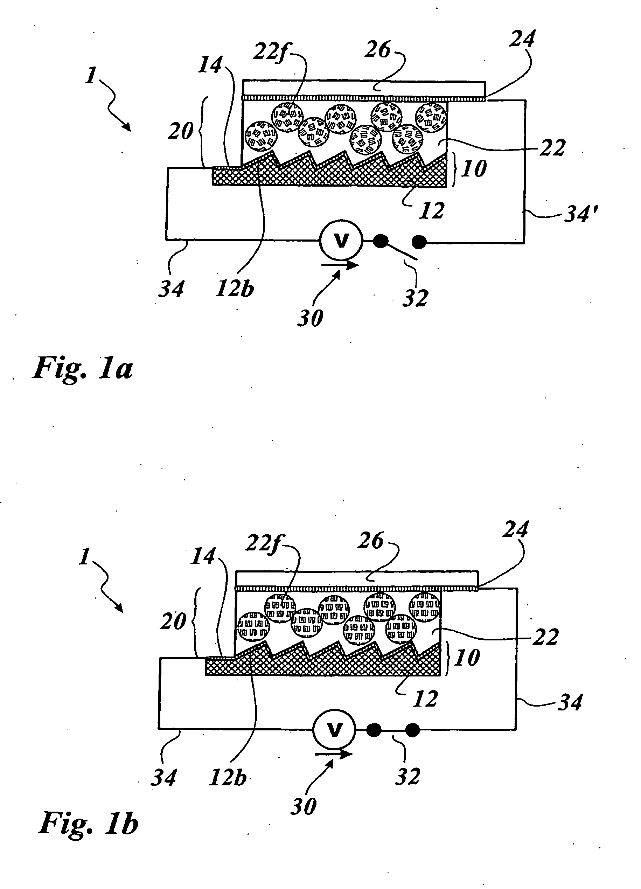

Fig. 1a und 1b zeigen in schematischer Schnittdarstellung einen Mehrschichtkörper 1 mit einem optisch variablen Schichtsystem 10 und einem steuerbaren Schichtsystem 20.

Bei dem Schichtsystem 10 handelt es sich um ein optisch variables Element (OVD) mit einer Strukturschicht 12, in die ein Beugungsgitter 12b abgeformt ist. Die Strukturschicht 12 kann beispielsweise aus einem thermoplastischen Replizierlack mit einer Schichtdicke von einigen µm ausgebildet sein, in den mit Hilfe einer beheizten Replizierwalze das Beugungsgitter 12b eingeprägt wurde. Die Strukturschicht 12 ist mit einer metallischen Reflexionsschicht 14 belegt, die beispielsweise aus Aluminium, Silber, Chrom, Kupfer oder Gold besteht.

Das steuerbare Schichtsystem 20 weist eine Trägerschicht 22 auf, die auf der metallischen Schicht 14 angeordnet ist. Bei der Trägerschicht 22 handelt es sich um eine Polymermatrix, in die eine Vielzahl von Flüssigkristall-Bläschen 22f eingebettet ist. Die Flüssigkristallbläschen haben einen Durchmesser von 0,1 µm bis 15 µm. Die Polymermatrix besteht aus PN393 , das mit einer Schichtdicke von 5 µm bis 40 µm aufgetragen sein kann. Bevorzugt ist eine Schichtdicke von 10 µm.

Auf der Trägerschicht 22 ist eine transparente Schutzschicht 26 angeordnet, die an ihrer Unterseite eine Elektrodenschicht 24 aufweist. In diesem Ausführungsbeispiel handelt es sich bei den Schichten 26 und 24 um eine durchsichtige leitfähig beschichtete Orgakon-Folie™ von Agfa, wobei die Elektrodenschicht 24 ein durchsichtiges leitfähiges Polymer ist. Es handelt sich dabei um PEDOT/PSS, das eine Schichtdicke von 50nm bis 500 nm aufweisen kann. Bevorzugt ist eine Schichtdicke von 200 nm. Die Elektrodenschicht 24 kann auch als transparente metallische Schicht ausgebildet sein. Zwischen der Elektrodenschicht 24 und der metallischen Reflexionsschicht 14 kann durch Anlegen einer elektrischen Spannung ein elektrisches Feld ausgebildet werden, in dem sich die in den Flüssigkristall-Bläschen 22f enthaltenen Flüssigkristalle ausrichten können. Die Flüssigkristalle sind in den Fig. 1a und 1b durch kurze Striche symbolisiert. Die metallische Reflexionsschicht 14 ist in diesem Ausführungsbeispiel deshalb zugleich eine Elektrodenschicht für das elektrisch steuerbare Schichtsystem 20. Es handelt sich also um eine Schicht mit einer Mehrfachfunktion.

Die elektrische Spannung zur Steuerung des Schichtsystems 20 wird von einer elektrischen Spannungsquelle 30 bereitgestellt, die durch Verbindungsleitungen 34 und 34' und einen Schalter 32 mit den Schichten 14 rund 24 elektrisch leitend verbunden ist. Bei den in den Fig. 1a und 1b symbolisch dargestellten Verbindungsleitungen 34, 34' kann es sich um Leiterbahnen handeln, die durch Weiterführung der elektrisch leitenden Schichten 14 und 24 gebildet sind. Es kann sich aber auch um metallische Leiterbahnen handeln, die in elektrischem Kontakt mit den Schichten 14 und 24 stehen und beispielsweise aufgedampft sind.

Fig. 1a zeigt den Mehrschichtkörper 1 bei geöffnetem Schalter 32. Die in den Flüssigkristall-Bläschen 22f angeordneten Flüssigkristalle nehmen eine ungeordnete zufällige Lage ein, so daß auf den Mehrschichtkörper 1 auftreffendes Licht diffus reflektiert wird, wodurch das erste Schichtsystem 10 nicht oder nur undeutlich erkennbar ist bzw. keinen optischen Effekt ausbilden kann.

Fig. 1b zeigt nun den Mehrschichtkörper 1 bei geschlossenem Schalter 32. Zwischen den Schichten 14 und 24 ist nun ein elektrisches Feld ausgebildet, dessen Feldlinien senkrecht zur Oberfläche der Schichten 14 und 24 ausgerichtet ist, so daß die in den Flüssigkristall-Bläschen 22f angeordneten Flüssigkristalle nunmehr eine geordnete Lage mit paralleler Ausrichtung zu den elektrischen Feldlinien einnehmen. Sie lassen nun wegen ihres geringen Durchmessers von einigen nm auf den Mehrschichtkörper 1 auftreffendes Licht nahezu vollständig auf die mit der Reflexionsschicht 14 belegte Oberfläche der Strukturschicht 12 auftreffen, so daß das erste Schichtsystem 10 seine optische Wirkung als OVD entfalten kann.

Bei dem Wirkprinzip der Ausrichtung der Flüssigkristalle an den elektrischen Feldlinien, das dem in Fig. 1a und 1b dargestellten Ausführungsbeispiel zugrunde liegt, ist die Polarität der elektrischen Spannungsquelle 30 ohne Bedeutung. Es kann sich bei der elektrischen Spannungsquelle 30 deshalb sowohl um eine Gleichspannungsquelle als auch um eine Wechselspannungsquelle handeln. Für die Ausbildung des zur Ausrichtung der Flüssigkristalle geeigneten elektrischen Feldes ist im wesentlichen die von der Spannungsquelle 30 abgegebene Spannung von Bedeutung. Bei dem in Fig. 1a und 1b dargestellten Ausführungsbeispiel ist eine Spannung von ungefähr 20 V vorgesehen.

In dem in Fig. 1a und 1b dargestellten Ausführungsbeispiel ist vorgesehen, daß die Spannungsquelle 30 mittels des Schalters 32 an- bzw. abgeschaltet wird. Es kann aber auch vorgesehen sein, auf den Schalter 32 zu verzichten und die Spannungsquelle 30 als einen Schwingkreis auszubilden, in dem durch ein äußeres elektromagnetisches Feld eine Wechselspannung induziert wird, die ggf. noch mittels eines Gleichrichters in eine Gleichspannung umgewandelt wird. Diese Gleichspannung kann durch eine geeignete Elektronik , z.b einen Ringoszillator, wieder in eine Wechselspannung im besonders günstigen Frequenzbereich um 100 Hz konvertiert werden. Es kann weiter ein Kondensator vorgesehen sein, der bei Ansteuerung mit Gleichspannung diese auch nach Abschaltung des elektromagnetischen Feldes noch für eine begrenzte Zeit bereitstellt. Bildet der Mehrschichtkörper beispielsweise einen sog. RFID-Tag, d.h. eine Schaltungsanordnung zur radiofrequenzgestützten Identifizierung von Objekten, kann es sich bei den vorstehend genannten Elementen um Bestandteile eines solchen RFID-Tag's handeln. Vorteilhafterweise kann der RFID-Tag als organischer Folien-Schaltkreis ausgebildet sein.

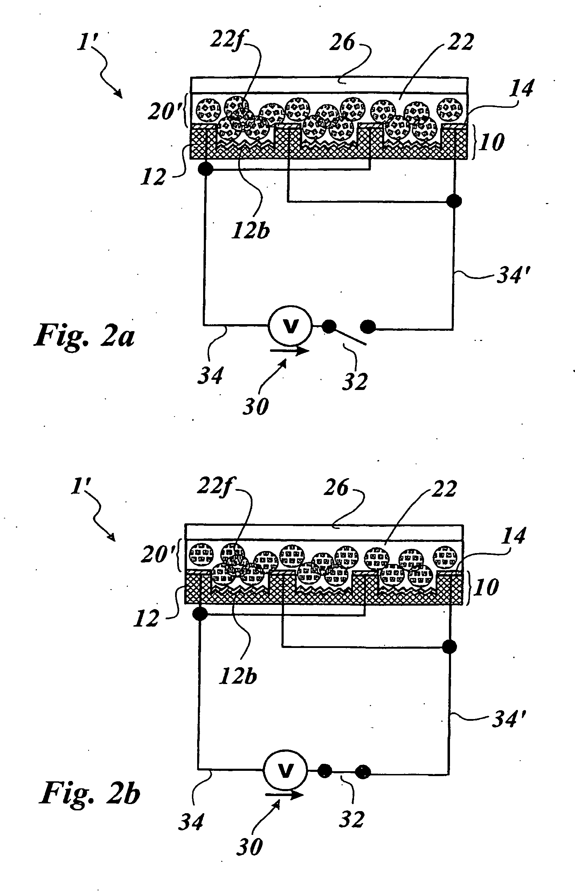

Die Fig. 2a und 2b zeigen nun einen Mehrschichtkörper 1', der nicht mit einer zweiten Elektrodenschicht ausgebildet ist (s. Elektrodenschicht 24 in Fig. 1a und 1b). Vielmehr ist die Strukturschicht 12 nun mit einer Reliefstruktur ausgebildet, die Erhebungen mit einer Breite von ca. 20 µm und einer Höhe von 20 µm bis 100 µm aufweist, die in einem Anstand < 100 µm angeordnet sind. Zwischen den Erhebungen sind in die Strukturschicht die Beugungsgitter 12b abgeformt, die auch in Fig. 1a und 1b dargestellt sind. Die metallische Reflexionsschicht 14 bildet nun auf den Erhebungen angeordnete streifenförmige Bereiche, die abwechselnd mit den Verbindungsleitungen 34 und 34' verschaltet sind, so daß die streifenförmigen Bereiche der Reflexionsschicht 14 bei geschlossenem Schalter 32 (siehe Fig. 2b) abwechselnd mit dem Plus- oder Minuspol der Spannungsquelle 30 verbunden sind. Das zwischen den Bereichen ausgebildete elektrische Feld verläuft also innerhalb der Trägerschicht 22 und nicht wie in dem in Fig. 1a und 1b dargestellten ersten Ausführungsbeispiel senkrecht zur Trägerschicht 22. Die in den Flüssigkristall-Bläschen 22f befindlichen Flüssigkristalle werden jedoch analog zu Fig. 1b im elektrischen Feld ausgerichtet, wenn der Schalter 32 geschlossen ist, wie in Fig. 2b dargestellt.

Es kann auch vorgesehen sein, die Erhebungen in der Strukturschicht 12 schachbrettartig anzuordnen und die Verbindungsleitungen als Matrix auszubilden, so daß jeder Bereich der Reflexionsschicht 14 zeilen- und spaltenweise ansteuerbar ist. Eine weiteres, nicht dargestelltes Ausführungsbeispiel kann zusätzlich eine Elektrodenschicht 24 vorsehen, wie in Fig. 1a und 1b dargestellt, so daß mit Hilfe der schachbrettartig strukturierten Reflexionsschicht 14 die über angesteuerten Bereichen der Reflexionsschicht 14 angeordneten Flüssigkristalle im elektrischen Feld ausgerichtet sind und die über nicht angesteuerten Bereichen der Reflexionsschicht 14 angeordneten Flüssigkristalle die ungeordnete Ausrichtung beibehalten. Die angesteuerten oder die nicht angesteuerten Bereiche können auf diese Weise ein Muster bilden, beispielsweise ein Logo oder eines oder mehrere alphanumerische Zeichen darstellen.

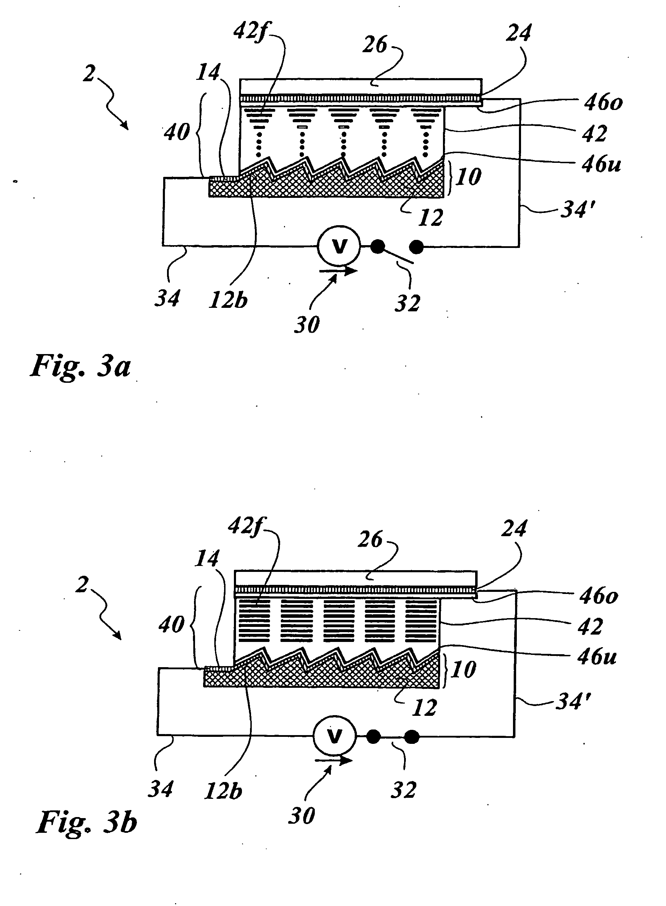

Die Fig. 3a und 3b zeigen nun einen Mehrschichtkörper 2, der sich von dem in Fig. 1a und 1b dargestellten Mehrschichtkörper 1 nur durch die Ausbildung des steuerbaren Schichtsystems unterscheidet. Ein steuerbares Schichtsystem 40 weist eine Flüssigkristallschicht 42 auf, in die Flüssigkristalle 42f eingebettet sind, welche die Polarisationsebene polarisierten Lichtes zu drehen vermögen.

Die Oberseite der Flüssigkristallschicht 42 ist durch eine obere Polarisatorschicht 46o und die Unterseite der Flüssigkristallschicht ist durch eine untere Polarisatorschicht 46u bedeckt. Die Polarisationsrichtungen der Polarisator-Schichten 46o und 46u sind um 90° gekreuzt. Einfallendes Licht wird also vor dem Eintritt in die Flüssigkristallschicht polarisiert. Die Flüssigkristalle drehen nun die Polarisationsebene des polarisierten Lichtes um 90°. Das hat zur Folge, daß das polarisierte Licht durch die untere Polarisations-Schicht 46u hindurchtreten kann und an der Reflexionsschicht 14 des Schichtsystems 10 reflektiert wird. Das reflektierte Licht wird nun wieder durch die in Stapeln angeordneten Flüssigkristalle 42f gedreht und tritt aus der oberen Polarisatorschicht 46o aus. Das Schichtsystem 40 erscheint deshalb durchsichtig und gibt den Blick frei auf das als OVD ausgebildete Schichtsystem 10.

Auf der oberen Polarisationsschicht 46o ist die transparente Schutzschicht 26 angeordnet, die an ihrer Unterseite die Elektrodenschicht 24 aufweist. Wie bereits oben ausgeführt, handelt es sich bei den Schichten 26 und 24 z.B. um eine durchsichtige leitfähig beschichtete Orgakon-Folie^{™}. Die Elektrodenschicht 24 ist über die Verbindungsleitung 34' und den Schalter 32 mit der Spannungsquelle 30 verbunden. Der andere Pol der Spannungsquelle 30 ist durch die Verbindungsleitung 34 mit der metallischen Schicht 14 verbunden. Auf diese Weise kann durch Schließen des Schalters 32 zwischen den Schichten 14 und 24 ein elektrisches Feld ausgebildet werden, wodurch die Flüssigkristalle 42f in eine solche Lage gebracht werden, daß das durch die obere Polarisations-Schicht 46o polarisierte Licht nicht mehr die untere Polarisationsschicht 46u zu passieren vermag. In Fig. 2b ist dieser Zustand des Mehrschichtkörpers 2 dargestellt, in dem der von dem Schichtsystem 10 ausgebildete optische Effekt nicht mehr zu beobachten ist.

Es kann auch vorgesehen sein, die obere Polarisationsschicht 46o und die untere Polarisationsschicht 46u mit gleicher Polarisationsrichtung anzuordnen, so daß das elektrisch steuerbare Schichtsystem 20 bei ausgeschalteter Spannung undurchsichtig erscheint und bei eingeschalteter Spannung durchsichtig erscheint.

Weiter können für die Flüssigkristallschicht 42f ferroelektrische Flüssigkristalle vorgesehen sein. Ferroelektrische Flüssigkristalle haben die Eigenschaft, elektrische Felder zu speichern, so daß der Schaltzustand einer mit ferroelektrischen Flüssigkristallen ausgebildeten Flüssigkristallschicht auch nach dem Abschalten der Spannung für längere Zeit erhalten bleibt. Diese Flüssigkristallschicht kann durch einen Schaltimpuls zurückgestellt werden.

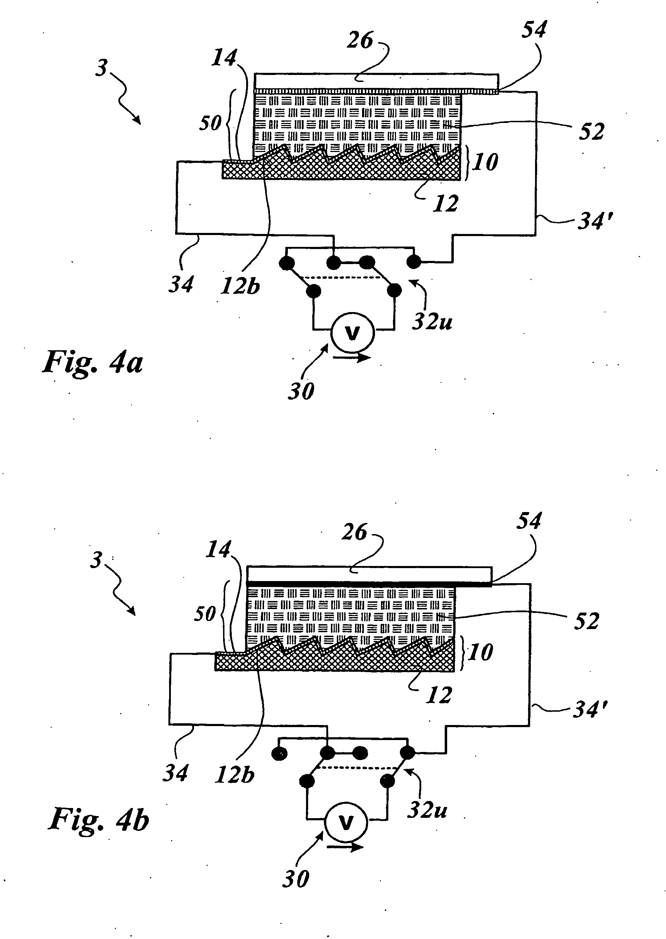

Fig. 4a und 4b zeigen nun einen Mehrschichtkörper 3, bei dem auf dem optisch veränderbaren Schichtsystem 10 ein elektrisch steuerbares Schichtsystem 50 angeordnet ist, das aus einer Elektrolytschicht 52 gebildet ist, die mit zwei Elektrodenschichten kontaktiert ist. Die untere Elektrodenschicht ist wie in den zuvor beschriebenen Ausführungsbeispielen durch die Reflexionsschicht 14 des Schichtsystems 10 gebildet. Eine obere Elektrodenschicht 54 ist aus einem elektrochromen Material gebildet, beispielsweise aus PEDOT/PSS. Die obere Elektrodenschicht 54 ist von der Schutzschicht 26 abgedeckt. Beide Elektrodenschichten 14 und 54 sind mit den Verbindungsleitungen 34 und 34', die an einen Schalter 32u geführt sind, mit der Spannungsquelle 30 verbunden. In dem in den Fig. 3a und 3b dargestellten dritten Ausführungsbeispiel handelt es sich bei der Spannungsquelle 30 um eine Gleichspannungsquelle, deren Polarität den optischen Zustand der elektrochromen Elektrodenschicht 54 bestimmt. Dabei fließt durch die Elektrolytschicht 52 ein elektrischer Strom, dessen Stromrichtung durch die Stellung des Schalters 32u bestimmt wird und der in dem dargestellten Ausführungsbeispiel Metallionen von der Elektrolytschicht 52 in die elektrochrome Elektrodenschicht 54 transportiert oder aus dieser entfernt. Wenn es sich beispielsweise um Wolframionen handelt, kann die elektrochrome Elektrodenschicht 54 von dunkelblau zu farblos gesteuert werden. Wie weiter oben beschrieben, sind weitere Ausführungen möglich, die auf durch die Stromrichtung bestimmte Redoxreaktionen oder auf der Änderung des pH-Wertes der Elektrolytschicht beruhen.

Bei dem Schalter 32u handelt es sich um einen zweipoligen Umschalter, mit dessen Hilfe die Stromrichtung des durch die Elektrolytschicht 52 fließenden elektrischen Stromes umkehrbar ist. Auf diese Weise kann die elektrochrome Elektrodenschicht 54 von einem ersten farbigen undurchsichtigen Zustand in einen farblosen durchsichtigen Zustand gebracht werden.

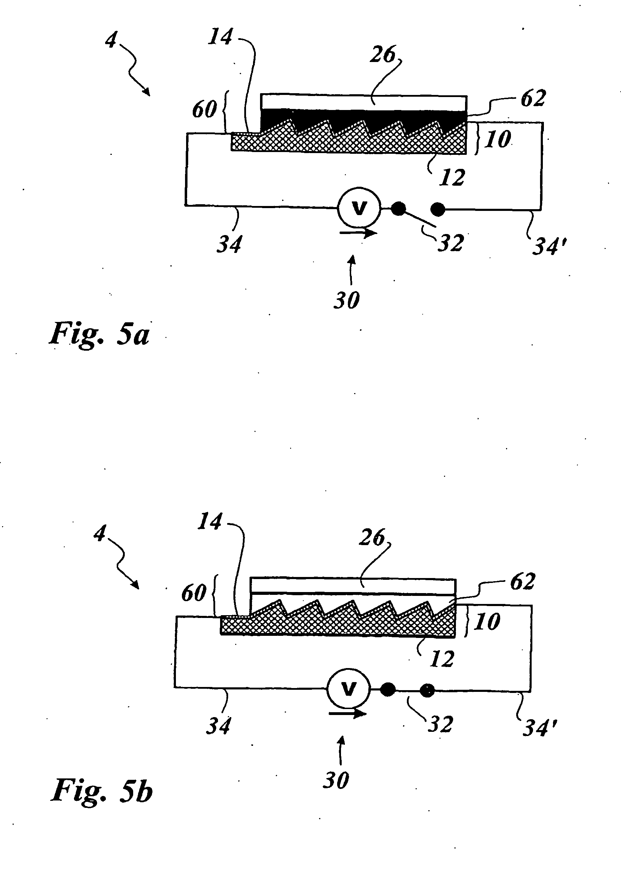

Die Fig. 5a und 5b zeigen einen Mehrschichtkörper 4, bei dem auf dem optisch veränderbaren Schichtsystem 10 ein elektrisch steuerbares Schichtsystem 60 angeordnet ist, das eine thermochrome Schicht 62 aufweist. Die thermochrome Schicht 62 besteht in dem dargestellten Ausführungsbeispiel aus TCX B-31 der Fa. Coates Screen in einer Schichtdicke von ca. 20 µm. Die Schichtdicke kann zwischen 0,5 und 100 µm betragen. Die thermochrome Schicht 62 ist von der Schutzschicht 26 bedeckt.

Die metallische Reflexionsschicht 14 des Schichtsystems 10 ist durch die elektrischen Verbindungsleitungen 34, 34' und den Schalter 32 mit der Spannungsquelle 30 verbunden und bildet zugleich eine elektrische Widerstandsschicht zum Erwärmen der thermochromen Schicht 62. Es handelt sich also wie bei den vorhergehenden Ausführungsbeispielen bei der Reflexionsschicht 14 um eine Schicht, die funktionell beiden Schichtsystemen des Mehrschichtkörpers zuordenbar ist. Es kann aber auch eine gesonderte Widerstandsschicht vorgesehen sein, insbesondere, wenn die Reflexionsschicht 14 nicht hinreichend elektrisch belastbar ist. In einem solchen Fall ist vorgesehen, daß die Widerstandsschicht transparent ausgebildet ist, beispielsweise aus ITÖ (Indium-Zinnoxid) oder einem anderen leitenden Material ist. Für transparente Widerstandsschichten kommen beispielsweise auch PEDOT/PSS oder PANI in Frage. Die Widerstandsschicht kann auch unter der Strukturschicht 12 angeordnet sein und muß in diesem Fall nicht transparent ausgebildet sein.

Wie in Fig. 5a zu erkennen ist, ist die thermochrome Schicht 62 undurchsichtig, wenn der Schalter 32 geöffnet ist. Wird nun der Schalter 32 geschlossen, wie in Fig. 5b dargestellt, wird die Reflexionsschicht 14 durch den einsetzenden Stromfluß erwärmt und infolgedessen wird auch die auf der Reflexionsschicht 14 angeordnete thermochrome Schicht 62 erwärmt und auf diese weise durchsichtig. Nunmehr ist der durch das optisch variable Schichtsystem 10 ausgebildete optische Effekt wahrnehmbar.

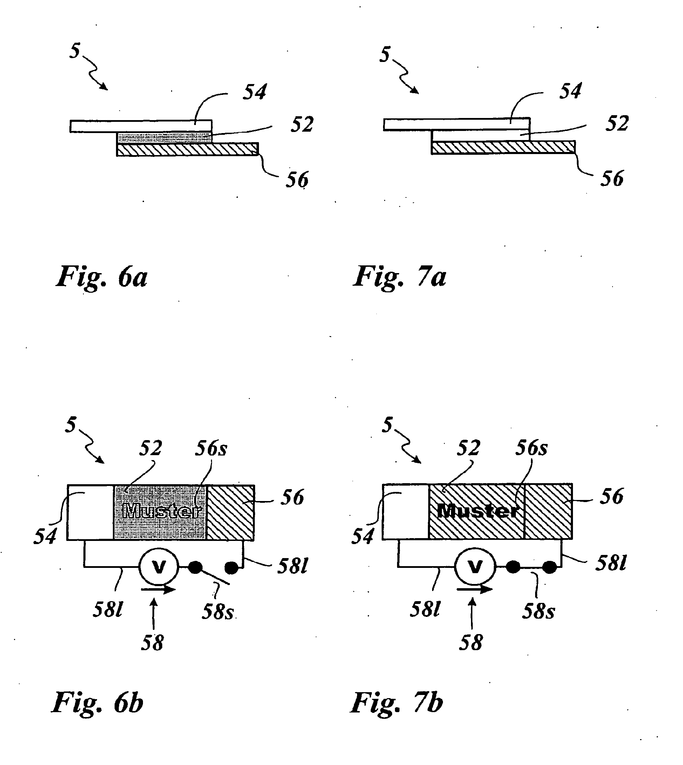

Die Fig. 6a bis 7b zeigen nun ein Anwendungsbeispiel des erfindungsgemäßen Mehrschichtkörpers.

Fig. 6a zeigt in einer schematischen Schnittdarstellung einen Mehrschichtkörper 5, der wie der in Fig. 1a und 1b dargestellte Mehrschichtkörper 1 ausgebildet ist. Dabei sind einige Schichten aus Fig. 1a und 1b jeweils zusammengefaßt.

Eine Schicht 52 mit in einer Polymermatrix gebundenen Flüssigkristallbläschen ist mit einer oberen Elektrodenschicht 54 versehen und auf einem OVD-Schichtsystem 56 angeordnet, das wie in Fig. 1a und 1b dargestellt, aus einer Replizierschicht und einer metallischen Reflexionsschicht gebildet ist. Die dem OVD-Schichtsystem zugewandte Reflexionsschicht bildet zugleich die untere Elektrodenschicht für die Schicht 52.

Fig. 6b zeigt nun in einer schematischen Draufsicht den Mehrschichtkörper 5, dessen Elektrodenschichten durch Verbindungsleitungen 581 und einen Schalter 58s mit einer Spannungsquelle 58 verbunden sind. Das OVD-Schichtsystem 56 weist einen Schriftzug 56s auf, der wegen der im spannungslosen Zustand opaken Schicht 52 nur undeutlich oder gar nicht wahrnehmbar ist.

Die Fig. 7a und 7b zeigen den Mehrschichtkörper 5, dessen Elektrodenschichten nunmehr mit der Spannungsquelle 58 verbunden sind, weil der Schalter 58 s geschlossen ist. Die Schicht 52 ist deshalb als klare Schicht ausgebildet, so daß nun der auf dem OVD-Schichtsystem 56 angeordnete Schriftzug 56s deutlich lesbar ist. Weiter ist nun der optische Effekt wahrzunehmen, bei dem es sich beispielsweise um einen Farbwechsel beim Kippen des Mehrschichtkörpers 5 handeln kann. Es kann auch vorgesehen sein, daß der Schriftzug 56s einen blickwinkelabhängigen optischen Effekt zeigt, z.B. scheinbar seine Lage wechselt.

Der erfindungsgemäße Mehrschichtkörper kann weitere Schichten aufweisen, beispielsweise eine Kleberschicht, die auf der Rückseite des optisch variablen Schichtsystems aufgetragen ist oder Schichten, die Funktionselemente wie Spannungsquellen, Sensoren oder elektronische Schaltungen ausbilden. Vorzugsweise kann vorgesehen sein, daß die Schichten aus Polymeren ausgebildet sind, insbesondere auch zur Ausbildung elektronischer Schaltkreise. Ausdrücklich sollen jedoch unter dem Begriff "organische" Schaltkreise auch Schaltkreise bzw. Schaltungsanordnungen verstanden werden, die neben organischen Schichten auch oder nur anorganische Schichten aufweisen.

Die erfindungsgemäßen Mehrschichtkörper zeichnen sich weiter dadurch aus, daß sie mit geringer Dicke und flexibel ausgebildet werden können, woraus sich bezüglich ihrer Anwendung und ihrer Herstellung besondere Vorteile ergeben. Die Mehrschichtkörper können beispielsweise als Folienkörper in einem Rolle-zu-Rolle-Prozeß kostengünstig hergestellt werden und eignen sich deshalb für Massenprodukte.

Der erfindungsgemäße Mehrschichtkörper kann auch ein unflexibles Trägermaterial aufweisen, beispielsweise aus Glas oder Keramik, ohne den Rahmen der Erfindung zu verlassen.

Weiter kann der erfindungsgemäße Mehrschichtkörper auch für eine irreversible Änderung der optischen Eigenschaften ausgebildet sein. Es kann beispielsweise vorgesehen sein, daß die Änderung durch eine kurzfristige Überspannung hervorgerufen ist und der Mehrschichtkörper permanent die eingetretene Überbeanspruchung signalisiert. Ein solcher Effekt kann beispielsweise bei elektrochromen Schichten durch einen irreversiblen chemischen Prozess in der Elektrolytschicht ausgelöst werden.

## Patentansprüche

1. Mehrschichtkörper mit einem optisch wirksamen ersten Schichtsystem und einem zweiten elektrisch steuerbaren Schichtsystem,
wobei
- es sich bei dem ersten Schichtsystem (10) um ein optisch variables Element (OVD) handelt, wobei das erste Schichtsystem (10) eine Replizierschicht (12) aufweist und in die Replizierschicht (12) eine diffraktive Reliefstruktur (12b) abgeformt ist, und/oder wobei das erste Schichtsystem (10) ein Dünnfilmschichtsystem ist zur Erzeugung von Farbeffekten mittels Interferenz, und/oder wobei das erste Schichtsystem (10) eine cholesterische Flüssigkristallschicht und eine Absorptionsschicht aufweist,
- die optische Wirkung des ersten Schichtsystems (10) durch das elektrisch steuerbare zweite Schichtsystem (20) beeinflußbar ist, das zweite Schichtsystem (20, 40, 50, 60) über dem ersten Schichtsystem (10) angeordnet ist,
- das zweite Schichtsystem (20, 40, 50) eine obere Elektrodenschicht und eine oder mehrere Schichten (24, 54) aufweist, die zwischen der oberen und einer unteren Elektrodenschicht (14) angeordnet sind, und
- das erste Schichtsystem (10) eine metallische Reflexionsschicht (14) aufweist, welche die untere Elektrodenschicht des zweiten Schichtsystems (20, 40, 50) bildet.

2. Mehrschichtkörper nach Anspruch 1,
**dadurch gekennzeichnet,**
**daß** das zweite Schichtsystem (20, 40, 50, 60) in seinen optischen Eigenschaften, insbesondere in seiner optischen Dichte und/oder in seiner Lichtstreuung und/oder in seiner Farbe elektrisch steuerbar ist.

3. Mehrschichtkörper nach Anspruch 1 oder 2,
**dadurch gekennzeichnet,**
**daß** die obere Elektrodenschicht (24, 54) aus Polyethylendioxythiopen (PEDOT)/PSS oder PANI besteht.

4. Mehrschichtkörper nach Anspruch 1 oder 2,
**dadurch gekennzeichnet,**
**daß** die obere Elektrodenschicht (24, 54) eine ITO (Indium-Zinnoxid)-Schicht ist.

5. Mehrschichtkörper nach Anspruch 1 oder 2,
**dadurch gekennzeichnet,**
**daß** die obere Elektrodenschicht (24, 54) und/oder die untere Elektrodenschicht (14) eine metallische Schicht aus beispielsweise Gold, Silber, Chrom oder Kupfer mit einer Schichtdicke < 10 nm ist.

6. Mehrschichtkörper nach einem der vorhergehenden Ansprüche, **dadurch gekennzeichnet,**
**daß** das zweite Schichtsystem (20, 40, 50) eine Schicht (22) aufweist, die eine Vielzahl von Flüssigkristall-Bläschen (22f) aufweist, die in einer Polymermatrix gebunden sind, die zwischen der oberen Elektrodenschicht (24) und der unteren Elektrodenschicht (14) angeordnet ist.

7. Mehrschichtkörper nach einem der Ansprüche 1 bis 5,
**dadurch gekennzeichnet,**
**daß** das zweite Schichtsystem (20, 40, 50) eine zwischen der oberen Elektrodenschicht (24) und der unteren Elektrodenschicht (14) angeordnete Flüssigkristallschicht (42) und mindestens eine Polarisatorschicht (46o, 46u) aufweist.

8. Mehrschichtkörper nach einem der Ansprüche 1 bis 5,
**dadurch gekennzeichnet,**
**daß** das zweite Schichtsystem (20, 40, 50) eine zwischen der oberen Elektrodenschicht (54) und der unteren Elektrodenschicht (14) angeordnete Elektrolytschicht (52) aufweist, und daß die obere Elektrodenschicht (54) eine elektrochrome Schicht ist, beispielsweise aus einem
elektrisch leitfähigen organischen Material, wie PEDOT/PSS, oder daß die Elektrolytschicht eine elektrochrome Schicht ist.

9. Mehrschichtkörper nach einem der vorhergehenden Ansprüche, **dadurch gekennzeichnet,**
**daß** das zweite Schichtsystem (60) eine thermochrome Schicht (62) und eine über oder unter der thermochromen Schicht (62) angeordnete elektrische Widerstandsschicht aufweist.

10. Mehrschichtkörper nach Anspruch 9,
**dadurch gekennzeichnet,**
**daß** mindestens eine Schicht des ersten Schichtsystems (10) die elektrische Widerstandsschicht des zweiten Schichtsystems (60) bildet.

11. Mehrschichtkörper nach Anspruch 9,
**dadurch gekennzeichnet,**
**daß** die elektrische Widerstandsschicht unter dem ersten Schichtsystem (10) angeordnet ist.

12. Mehrschichtkörper nach einem der vorhergehenden Ansprüche, **dadurch gekennzeichnet,**
**daß** das zweite Schichtsystem (20, 40, 50) eine Elektrodenschicht aufweist, die als partielle Elektrodenschicht ausgebildet ist, beispielsweise mit streifenförmig oder matrixförmig angeordneten Elektrodenbereichen.

13. Mehrschichtkörper nach einem der vorhergehenden Ansprüche, **dadurch gekennzeichnet,**
**daß** das erste Schichtsystem (10) Bereiche aufweist, die eine bildliche und/oder alphanumerische Information wiedergeben.

14. Mehrschichtkörper nach einem der vorhergehenden Ansprüche, **dadurch gekennzeichnet,**
**daß** die optische Wirkung des zweiten Schichtsystems (20, 40, 50, 60) reversibel steuerbar ist.

15. Mehrschichtkörper nach einem der Ansprüche 1 bis 13,
**dadurch gekennzeichnet,**
**daß** die optische Wirkung des zweiten Schichtsystems (20, 40, 50, 60) irreversibel steuerbar ist.

16. Mehrschichtkörper nach einem der vorhergehenden Ansprüche, **dadurch gekennzeichnet,**
**daß** die optische Wirkung des zweiten Schichtsystems (20, 40, 50, 60) bistabil steuerbar ist.

17. Mehrschichtkörper nach einem der vorhergehenden Ansprüche, **dadurch gekennzeichnet,**
**daß** der Mehrschichtkörper (1, 2, 3, 4, 5) eine organische und/oder anorganische Ansteuerelektronik aufweist.

18. Mehrschichtkörper nach einem der vorhergehenden Ansprüche, **dadurch gekennzeichnet,**
**daß** der Mehrschichtkörper (1, 2, 3, 4, 5) einen oder mehrere Sensoren und/oder RFID-Schaltungen und/oder Displays und/oder Schalter und/oder Spannungsquellen aufweist.

19. Mehrschichtkörper nach einem der vorhergehenden Ansprüche, **dadurch gekennzeichnet,**
**daß** der Mehrschichtkörper (1, 2, 3, 4, 5) flexibel ausgebildet ist und/oder eine flexible Trägerfolie aufweist.

## Claims

1. Multilayer body having an optically effective first layer system and a second electrically controllable layer system,
wherein
- the first layer system (10) is an optically variable element (OVD), wherein the first layer system (10) has a replication layer (12) and a diffractive relief structure (12b) is moulded into the replication layer (12), and/or wherein the first layer system (10) is a thin film layer system for the production of colour effects by means of interference, and/or wherein the first layer system (10) has a cholesteric liquid crystal layer and an absorption layer,
- the optical effect of the first layer system (10) can be affected by the electrically controllable second layer system (20), the second layer system (20, 40, 50, 60) is arranged above the first layer system (10),
- the second layer system (20, 40, 50) has an upper electrode layer and one or more layers (24, 54) which are arranged between the upper and a lower electrode layer (14), and
- the first layer system (10) has a metallic reflection layer (14) which forms the lower electrode layer of the second layer system (20, 40, 50).

2. Multilayer body according to claim 1,
**characterised in that**
the second layer system (20, 40, 50, 60) is electrically controllable in its optical characteristics, in particular in its optical density and/or in its light scattering and/or in its colour.

3. Multilayer body according to claim 1 or 2,
**characterised in that**
the upper electrode layer (24, 54) consists of polyethylenedioxythiophene (PEDOT)/PSS or PANI.

4. Multilayer body according to claim 1 or 2,
**characterised in that**
the upper electrode layer (24, 54) is an ITO (indium tin oxide) layer.

5. Multilayer body according to claim 1 or 2,
**characterised in that**
the upper electrode layer (24, 54) and/or the lower electrode layer (14) is a metallic layer made from gold, silver, chromiumor copper, for example, with a layer density of <10nm.

6. Multilayer body according to one of the preceding claims, **characterised in that**
the second layer system (20, 40, 50) has a layer (22) which has a plurality of liquid crystal bubbles (22f) which are connected in a polymer matrix which is arranged between the upper electrode layer (24) and the lower electrode layer (14).

7. Multilayer body according to one of claims 1 to 5, **characterised in that**
the second layer system (20, 40, 50) has a liquid crystal layer (42) which is arranged between the upper electrode layer (24) and the lower electrode layer (14), and at least one polariser layer (46o, 46u).

8. Multilayer body according to one of claims 1 to 5, **characterised in that**
the second layer system (20, 40, 50) has an electrolyte layer (52) which is arranged between the upper electrode layer (54) and the lower electrode layer (14), and the upper electrode layer (54) is an electrochromic layer, for example made from an electrically conductive organic material such as PEDOT/PSS, or the electrolyte layer is an electrochromic layer.

9. Multilayer body according to one of the preceding claims, **characterised in that**
the second layer system (60) has a thermochromic layer (62) and an electricalresistance layer which is arranged above or below the thermochromic layer (62).

10. Multilayer body according to claim 9,
**characterised in that**
at least one layer of the first layer system (10) forms the electrical resistance layer of the second layer system (60).

11. Multilayer body according to claim 9,
**characterised in that**,
the electrical resistance layer is arranged under the first layer system (10).

12. Multilayer body according to one of the preceding claims, **characterised in that**
the second layer system (20, 40, 50) has an electrode layer which is formed as a partial electrode layer, for example with electrode regions arranged in the form of strips or matrices.

13. Multilayer body according to one of the preceding claims, **characterised in that**
the first layer system (10) has regions which display graphic and/or alphanumeric information.

14. Multilayer body according to one of the preceding claims, **characterised in that**
the optical effect of the second layer system (20, 40, 50, 60) is reversibly controllable.

15. Multilayer body according to one of claims 1 to 13, **characterised in that**
the optical effect of the second layer system (20, 40, 50, 60) is irreversibly controllable.

16. Multilayer body according to one of the preceding claims, **characterised in that**
the optical effect of the second layer system (20, 40, 50, 60) can be controlled in abistable manner.

17. Multilayer body according to one of the preceding claims, **characterised in that**
the multilayer body (1, 2, 3, 4, 5) has organic and/or inorganic control electronics.

18. Multilayer body according to one of the preceding claims, **characterised in that**
the multilayerbody (1, 2, 3, 4, 5) has one or more sensors and/or RFID circuits and/or displays and/or switches and/or voltage sources.

19. Multilayer body according to one of the preceding claims, **characterised in that**
the multilayer body (1, 2, 3, 4, 5) is designed to be flexible and/or has a flexible carrier film.

## Revendications

1. Corps multicouche comprenant un premier système de couches à effet optique et un deuxième système de couches à commande électrique,
sachant que
- le premier système de couches (10) est un élément à variation optique (OVD), sachant que le premier système de couches (10) présente une couche de réplication (12) et qu'une structure en relief (12b) diffractive est surmoulée dans la couche de réplication (12),
et/ou sachant que le premier système de couches (10) est un système de couches à pellicule mince servant à produire des effets de couleur au moyen d'une interférence, et/ou sachant que le premier système de couches (10) présente une couche de cristaux liquides cholestérique et une couche d'absorption,
- l'effet optique du premier système de couches (10) peut être influencé par le deuxième système de couches (20) à commande électrique, que le deuxième système de couches (20, 40, 50, 60) est disposé sur le premier système de couches (10),
- le deuxième système de couche (20, 40, 50) présente une couche d'électrodes supérieure et une ou plusieurs couches (24, 54) qui sont disposées entre la couche d'électrodes supérieure et la couche d'électrodes inférieure (14), et
- le premier système de couches (10) présente une couche réfléchissante (14) métallique, qui forme la couche d'électrodes inférieure du deuxième système de couches (20, 40, 50).

2. Corps multicouche selon la revendication 1, **caractérisé en ce que**
les propriétés optiques du deuxième système de couches (20, 40, 50, 60), en particulier sa densité optique et/ou sa diffusion de lumière et/ou sa couleur, peuvent être commandées électriquement.

3. Corps multicouche selon la revendication 1 ou 2, **caractérisé en ce que**
la couche d'électrodes supérieure (24, 54) est constituée d'un polyéthylène dioxythiophène (PEDOT)/PSS ou d'une polyaniline.

4. Corps multicouche selon la revendication 1 ou 2, **caractérisé en ce que**
que la couche d'électrodes supérieure (24, 54) est une couche d'ITO (oxyde d'indium-étain).

5. Corps multicouche selon la revendication 1 ou 2, **caractérisé en ce que**
la couche d'électrodes supérieure (24, 54) et/ou la couche d'électrodes inférieure (14) sont une couche métallique composée par exemple d'or, d'argent, de chrome ou de cuivre présentant une épaisseur de couche < 10 nm.

6. Corps multicouche selon l'une quelconque des revendications précédentes,
**caractérisé en ce que**
le deuxième système de couches (20, 40, 50) présente une couche (22), qui présente une pluralité de bulles de cristaux liquides (22f), qui sont liées dans une matrice polymère, qui est disposée entre la couche d'électrodes supérieure (24) et la couche d'électrodes inférieure (14).

7. Corps multicouche selon l'une quelconque des revendications 1 à 5,
**caractérisé en ce que**
le deuxième système de couches (20, 40, 50) présente une couche de cristaux liquides (42) disposée entre la couche d'électrodes supérieure (24) et la couche d'électrodes inférieure (14) et au moins une couche de polarisation (46o, 46u).

8. Corps multicouche selon l'une quelconque des revendications 1 à 5,
**caractérisé en ce que**
le deuxième système de couches (20, 40, 50) présente une couche d'électrolytes (52) disposée entre la couche d'électrodes supérieure (54) et la couche d'électrodes inférieure (14), et **en ce que** la couche d'électrodes supérieure (54) est une couche électrochromique, composée par exemple d'un matériau organique électroconducteur, tel que du PEDOT/PSS, ou en ce que la couche d'électrolytes est une couche électrochromique.

9. Corps multicouche selon l'une quelconque des revendications précédentes,
**caractérisé en ce que**
le deuxième système de couches (60) présente une couche thermochromique (62) et une couche de résistance électrique disposée sur ou sous la couche thermochromique (62).

10. Corps multicouche selon la revendication 9, **caractérisé en ce que**
au moins une couche du premier système de couches (10) forme la couche de résistance électrique du deuxième système de couches (60).

11. Corps multicouche selon la revendication 9, **caractérisé en ce que**
la couche de résistance électrique est disposée sous le premier système de couches (10).

12. Corps multicouche selon l'une quelconque des revendications précédentes,
**caractérisé en ce que**
le deuxième système de couches (20, 40, 50) présente une couche d'électrodes, qui est réalisée sous la forme d'une couche d'électrodes partielle, par exemple avec des zones d'électrodes disposées de manière à présenter une forme de bande ou une forme de matrice.

13. Corps multicouche selon l'une quelconque des revendications précédentes,
**caractérisé en ce que**
le premier système de couches (10) présente des zones, qui reproduisent une information sous forme d'images et/ou de caractères alphanumériques.

14. Corps multicouche selon l'une quelconque des revendications précédentes,
**caractérisé en ce que**
l'effet optique du deuxième système de couches (20, 40, 50, 60) peut être commandé de manière réversible.

15. Corps multicouche selon l'une quelconque des revendications 1 à 13,
**caractérisé en ce que**
l'effet optique du deuxième système de couches (20, 40, 50, 60) peut être commandé de manière réversible.

16. Corps multicouche selon l'une quelconque des revendications précédentes,
**caractérisé en ce que**
l'effet optique du deuxième système de couches (20, 40, 50, 60) peut être commandé de manière bistable.

17. Corps multicouche selon l'une quelconque des revendications précédentes,
**caractérisé en ce que**
le corps multicouche (1, 2, 3, 4, 5) présente un système électronique de pilotage organique et/ou inorganique.

18. Corps multicouche selon l'une quelconque des revendications précédentes,
**caractérisé en ce que**
le corps multicouche (1, 2, 3, 4, 5) présente un ou plusieurs capteurs et/ou des circuits RFID et/ou des écrans et/ou des commutateurs et/ou des sources de tension.

19. Corps multicouche selon l'une quelconque des revendications précédentes,
**caractérisé en ce que**
le corps multicouche (1, 2, 3, 4, 5) est réalisé de manière flexible et/ou présente un film de support flexible.
